# FASCICULE DE BREVET EUROPEEN

(11) **EP 2 837 283 B1**
(45) Date de publication et mention de la délivrance du brevet: **16.11.2016**
(21) Numéro de dépôt: 14290209.7
(22) Date de dépôt: 17.07.2014
(51) Int. Cl.: A01G 23/10

(54) **Outil de gemmage**
Harznutzungswerkzeug
Tapping tool

(30) Priorité: 12.08.2013 FR 1301919
(43) Date de publication de la demande: 18.02.2015
(73) Titulaire: Holiste Laboratoires et Développement, 71110 Artaix (FR)
(72) Inventeur: Collaudin, Jean-Michel, 71800 Saint-Germain-en-Brionnais (FR)
(74) Mandataire: Flavenot, Bernard

(56) Documents cités:
- FR-A1- 2 774 257
- US-A- 2 566 464
- US-A- 2 718 341
- US-A- 2 932 127
- US-A- 3 121 974

## Description

La présente invention concerne les outils de gemmage, c'est-à-dire les outils utilisés pour la récolte de l'oléorésine contenue dans un arbre, plus particulièrement l'oléorésine du pin maritime ou autres conifères.

Les fonctions de ces outils sont essentiellement : la réalisation des cares dans le fût des arbres et, pour certains de ces outils, le dépôt, sur ces cares, d'un produit qui favorise la sécrétion de l'oléorésine.

Il existe déjà de tels outils qui donnent de relativement bons résultats, par exemple ceux décrits et illustrés dans les FR-A-2774257, US-A-2566464 et US-A-2718341. Mais ils présentent des inconvénients, notamment le fait qu'ils se composent de deux parties distinctes ayant respectivement, de façon indépendante, les deux fonctions définies ci-dessus et qu'ils ne permettent généralement pas un dépôt du produit de façon homogène.

De plus, il est clair que cette réalisation est relativement onéreuse car elle nécessite la fabrication et l'assemblage d'un nombre d'éléments constitutifs des deux parties relativement important et impose un temps de manipulation non négligeable pour passer de l'utilisation d'une des deux parties à l'utilisation de l'autre. Ces inconvénients nuisent incontestablement au rendement total de la récolte, surtout quand on considère qu'il est nécessaire d'agir de cette façon sur un très grand nombre d'arbres.

Aussi, la présente invention a-t-elle pour but de réaliser un outil de gemmage qui obvie en grande partie aux inconvénients mentionnés ci-dessus des outils de gemmage de l'art antérieur.

Plus précisément, la présente invention a pour objet un outil de gemmage défini selon les caractéristiques énoncées dans, notamment, la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 est une vue en coupe longitudinale d'un schéma de principe d'un mode de réalisation de l'outil de gemmage selon l'invention,
La figure 2 est une vue en coupe longitudinale d'un mode de réalisation industriel de l'outil de gemmage selon l'invention en accord avec la représentation de la figure 1, en représentation selon des conventions de dessin industriel bien connues des hommes de l'art, et
La figure 3 est un schéma d'une care obtenue avec l'outil selon l'invention, permettant d'illustrer et d'expliciter l'utilisation et le fonctionnement de cet outil.

Il est précisé que, dans la présente description, si l'adverbe "sensiblement" est associé à un qualificatif d'un moyen donné, ce qualificatif doit être compris au sens strict ou approché.

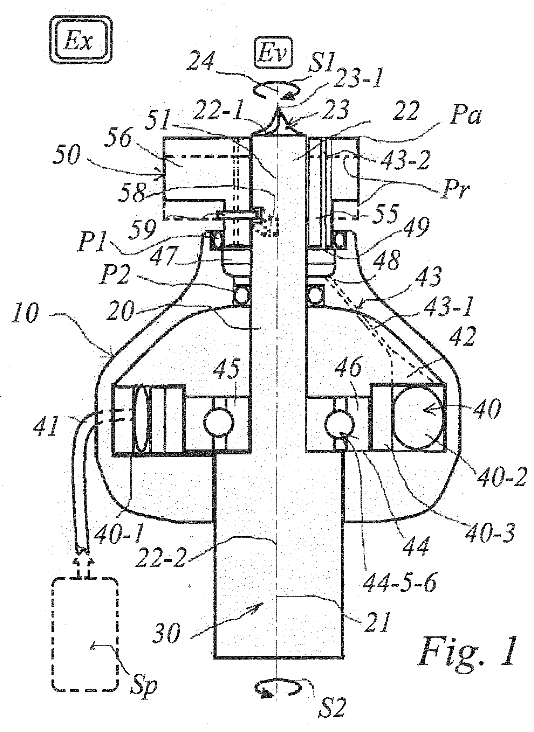

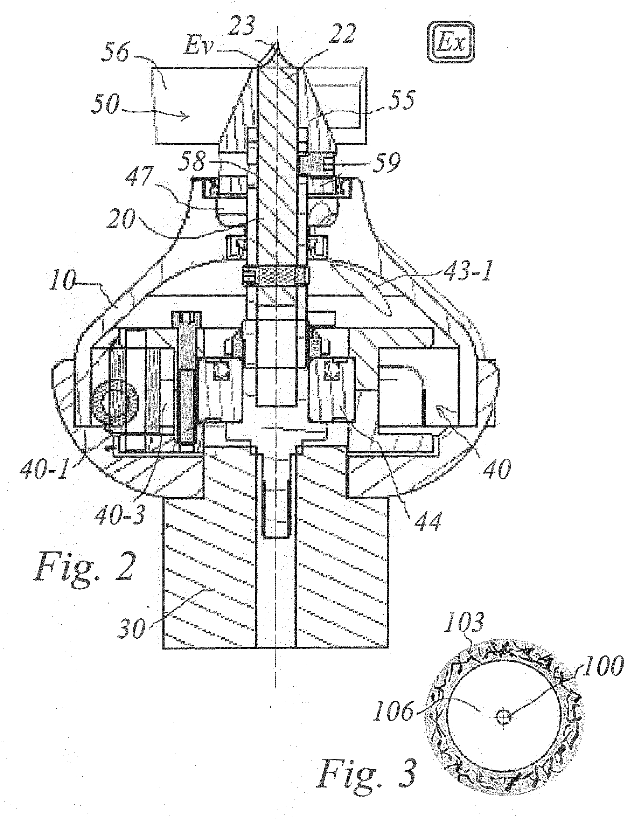

La présente invention est relative à un outil de gemmage qui, en regard des figures 1 et 2, comporte un support 10, par exemple avantageusement de type boîtier ou analogue comme celui qui est illustré, un arbre de rotation 20 défini selon un axe de rotation 21, et des moyens pour monter cet arbre en rotation par rapport au support 10 de façon qu'au moins une première extrémité 22 de l'arbre émerge à l'extérieur Ex du support, ou de façon équivalente selon la forme du support, c'est-à-dire déborde de celui-ci, ainsi que de préférence sa seconde extrémité 22-2 opposée à la première 22 pour faciliter l'association de moyens 30 avec l'arbre 20 pour commander sa rotation autour de son axe de rotation 21.

Ces moyens 30 pour monter l'arbre 20 en rotation autour de son axe de rotation peuvent être de tout type, par exemple manuels, mais très avantageusement constitués d'un moteur électrique alimenté de façon préférentielle par une batterie rechargeable ou analogue, de façon que l'outil soit apte à être utilisé en tout lieu.

Cet outil de gemmage comporte en outre des moyens de fraisage 50 définis selon un axe de fraisage 51, et des moyens pour associer en rotation les moyens de fraisage 50 à la première extrémité 22 de l'arbre de rotation 20 de façon que l'axe de fraisage 51 soit sensiblement confondu avec l'axe de rotation 21. Un mode de réalisation très préférentiel de ces deux moyens sera décrit ci-après.

Il comporte aussi une pompe 40 comportant une entrée d'aspiration 41 apte à être reliée à une source Sp de produit, et une sortie d'insufflation 42, des moyens pour commander le fonctionnement de cette pompe 40 par la rotation de l'arbre 20, et des moyens 43 pour relier la sortie d'insufflation 42 à un endroit Ev situé à l'extérieur Ex du support 10 et voisin de la partie 22-1 la plus émergente de la première extrémité 22 de l'arbre.

Selon une réalisation tout à fait préférentielle compte tenu de ses nombreux avantages qui apparaîtront au cours de la présente description, les moyens 30 pour commander la rotation de l'arbre 20 autour de son axe de rotation 21 sont agencés pour commander sa rotation dans les deux sens, à savoir, soit dans un premier sens défini par le sens S1, soit dans un second sens défini par le sens S2 qui est donc opposé au sens S1.

Selon ce mode de réalisation, le moteur électrique défini ci-avant est donc du type à deux sens de rotation, fonctionnant de façon connue au moyen par exemple d'un inverseur. Ce type de moteur est bien connu en lui-même, par exemple comme ceux qui sont dans le commerce sous les Marques DEWALT^{®}, PROTOOLS^{®}, METABO^{®}, et ne sera donc pas plus amplement décrit ici.

Quant aux moyens de fraisage 50, ils sont aptes à fraiser uniquement lorsque l'arbre de rotation 20 pivote dans le sens S1, alors que les moyens pour commander le fonctionnement de la pompe 40 sont, eux, agencés de façon que cette pompe ne fonctionne que lorsque l'arbre 20 pivote dans le second sens de rotation S2.

Selon un mode de réalisation préférentiel, les moyens de fraisage 50 mentionnés ci-avant comportent un manchon 55 monté coulissant sur la première extrémité 22 de l'arbre 20 entre une première position et une seconde position.

La première position du manchon, en traits pleins sur la figure 1 et référencée Pa, est celle dans laquelle le manchon 55 est le plus proche de la partie 22-1 la plus émergente de la première extrémité 22 de l'arbre 20.

Quant à la seconde position, évoquée en traits interrompus sur cette figure 1 et référencée Pr, elle est celle dans laquelle le manchon 55 est éloigné de cette partie la plus émergente 22-1.

L'outil comporte en outre des moyens pour positionner le manchon 55 dans sa première position quand l'arbre 20 pivote dans le premier sens de rotation S1, et dans sa seconde position quand ce même arbre 20 pivote dans le second sens de rotation S2, étant précisé que même dans ce déplacement entre ces deux positions Pa et Pr, le manchon 55 est toujours entraîné en rotation par le moteur 30 quel que soit le sens de rotation S1, S2, grâce aux moyens pour associer en rotation les moyens de fraisage 50 à la première extrémité 22 de l'arbre de rotation 20 dont un mode de réalisation avantageux sera donné ci-après.

Ces moyens de fraisage 50 comportent aussi au moins une lame de fraisage 56 de relativement grande envergure, généralement plusieurs lames de fraisage, par exemple trois réparties à cent-vingt degrés les unes par rapport aux autres, montée solidaire du manchon 55 de façon qu'elle pivote autour de l'axe de rotation 21 et qu'elle ne soit apte à fraiser que lorsque l'arbre de rotation 20 pivote dans le premier sens S1. Une telle lame de fraisage est bien connue des hommes du métier, notamment de ceux qui travaillent le bois, et, dans l'unique souci de simplifier la présente description, elle ne sera donc pas décrite ici plus en détail.

Selon un mode de réalisation très préféré, les moyens pour positionner le manchon 55 dans l'une des première et seconde positions quand l'arbre 20 pivote respectivement dans un sens et dans l'autre, et les moyens pour associer en rotation les moyens de fraisage 50 à la première extrémité 22 de l'arbre de rotation 20 comportent, comme illustré schématiquement sur la figure 1, une gorge 58 de forme hélicoïdale suivant l'axe de rotation 21 et réalisée dans l'un des deux éléments suivants : arbre de rotation 20, manchon 55, et un ergot 59 monté solidaire en saillie sur l'autre de ces deux éléments de façon qu'il plonge dans la gorge et la parcoure quand l'arbre de rotation 20 pivote aussi dans le sens de rotation S1 que dans le sens S2.

En fait, l'association « gorge - ergot » constitue un ensemble qui permet, en fonction de la rotation de l'arbre 20 qui est cylindrique de révolution, d'obtenir à la fois la translation des moyens de fraisage 50 et leur rotation.

De façon identique, l'ensemble défini ci-dessus s'entend aussi une réalisation constituée d'un filet mâle (*correspondant à l'ergot*) coopérant avec un filet femelle complémentaire (*correspondant à la gorge)* sur une longueur déterminée pour obtenir la translation désirée comme défini ci-dessus.

De façon préférentielle, la gorge 58 est réalisée dans l'arbre de rotation 20 et l'ergot 59 est, lui, solidaire du manchon 55.

Comme il est mentionné ci-avant, la lame de fraisage 56 est de relativement grande envergure. En conséquence, pour pouvoir fraiser le tronc de l'arbre de façon correcte et ainsi obtenir une care de bonne qualité, il est très avantageux que l'outil comporte en outre des moyens de pointage de type forant 23 définis selon un axe de pointage 24. Ces moyens de pointage forants comportent, de façon connue en elle-même et comme ceux qui sont situés à l'extrémité pénétrante des forets, une extrémité 23-1 relativement pointue pour favoriser la pénétration dans le bois.

L'outil de gemmage comporte donc en outre des moyens pour associer ces moyens de pointage forants à la partie 22-1 la plus émergente de la première extrémité 22 de l'arbre 20 de façon que l'axe de pointage 24 soit sensiblement confondu avec l'axe de rotation 21 et que ces moyens de pointage forants 23 pointent en forant uniquement lorsque l'arbre 20 pivote dans le premier sens de rotation S1, tout comme avec les forets mentionnés ci-dessus.

Les moyens pour associer les moyens de pointage forants 23 à la partie 22-1 la plus émergente de la première extrémité 22 de l'arbre 20 sont par exemple constitués par le fait que ces moyens de pointage forants sont réalisés d'une seule pièce avec l'arbre de rotation 20, comme illustré sur les figures 1 et 2.

Il est à noter que les positions relatives de l'ergot 59 sur le manchon 55 et de la rainure 58 dans l'arbre 20 sont déterminées de façon que, quand la lame de fraisage 56 est dans sa position la plus à proximité des moyens de pointage 23, position Pa, figures 1 et 2, elle reste malgré tout en retrait par rapport au moins à l'extrémité pointue 23-1 des moyens de pointage 23 de façon que, lors du pointage et même au cours du fraisage comme explicité ci-après, cette extrémité pointue reste constamment dans l'avant-trou.

De façon très préférentielle, et très avantageuse sur le plan industriel en raison de sa compacité et de sa facilité de mise en oeuvre, la pompe 40 est constituée d'une pompe péristaltique connue en elle-même, comportant au moins un corps 40-1, un tube flexible 40-2 et un rotor 40-3 apte à être entraîné en rotation pour presser de façon cyclique le tube flexible à l'intérieur du corps et faire ainsi circuler dans le tube 40-2, par aspiration, le produit en provenance de la source de produit Sp.

Dans ce cas de réalisation, les moyens pour commander le fonctionnement de la pompe péristaltique sont constitués par une roue libre 44 comportant au moins deux bagues respectivement intérieure 45 et extérieure 46, des moyens pour fixer la bague intérieure 45 à l'arbre de rotation 20, des moyens pour fixer la bague extérieure 46 au rotor 40-3, et des moyens de roulement 44-5-6 montés en coopération entre les deux bagues intérieure et extérieure 45, 46, ces moyens de roulement 44-5-6, bien connus en eux-mêmes dans les "roues libres", étant agencés pour entraîner en rotation la bague extérieure 46 par rapport à la bague intérieure 45 uniquement quand la bague intérieure 45 pivote dans le sens S2.

Quant aux moyens 43 pour relier la sortie d'insufflation 42 à un endroit Ev voisin de la partie 22-1 la plus émergente de la première extrémité 22 de l'arbre 20, ils sont très avantageusement constitués par une cavité étanche dite "collecteur" 47 comportant au moins une entrée 48 et une sortie 49, cette cavité collecteur étant agencée de façon que sa paroi intérieure soit définie par au moins une partie de la paroi du manchon 55, ce dernier étant alors monté coulissant dans cette cavité collecteur au moyen d'un passage étanche P1.

Ces moyens 43 comportent en outre une première conduite 43-1 reliant la sortie d'insufflation 42 de la pompe à l'entrée 48 de la cavité collecteur 47, et une seconde conduite 43-2 reliant la sortie 49 de la cavité collecteur 47 à l'endroit Ev voisin de la partie 22-1 la plus émergente de la première extrémité 22 de l'arbre de rotation, la seconde conduite étant réalisée dans le manchon 55.

De façon très préférentielle, la cavité collecteur 47 présente une forme annulaire entourant l'arbre de rotation 20, la paroi latérale de l'arbre constituant la paroi annulaire centrale de la cavité collecteur 47, l'étanchéité entre l'arbre et la cavité étant obtenue par un passage étanche P2.

Ces deux passages étanches P1, P2 sont essentiellement réalisés par des joints, bagues en anneau ou analogues, bien connus en eux-mêmes.

Il est en outre souligné que la distance entre les deux positions Pa et Pr, comme défini ci-avant, est une fonction du pas de la rainure 58, de sa longueur et du diamètre de l'arbre de rotation 20. L'épaisseur de l'ergot confère à ce dernier sa propre solidité.

A titre d'exemple, dans un prototype réalisé par la Demanderesse qui a donné de bons résultats, pour une lame de fraisage 56 d'un diamètre de l'ordre de 7,5 cm et un arbre de diamètre 1,8 cm, la distance entre Pa et Pr était d'environ 0,3 cm

Avec cet exemple et le contenu de la présente description, un homme du métier n'aura aucune difficulté pour déterminer les caractéristiques structurelles de l'ensemble «rainure 58 - ergot 59».

L'outil de gemmage décrit ci-dessus et illustré sur les figures 1 et 2 annexées fonctionne et s'utilise comme décrit ci-dessous en référence en outre à la figure 3.

L'utilisateur de l'outil de gemmage commence par relier l'entrée d'aspiration 41 de la pompe 40 à la source Sp de produit favorisant la sécrétion de l'oléorésine, par exemple un produit tel que décrit dans le WO2013/102706 au nom de la Demanderesse.

Puis, devant un arbre qu'il doit traiter pour le gemmage, il commande les moyens de rotation de façon qu'ils entraînent l'arbre 20 en rotation dans le sens S1, celui qui permet le forage avec les moyens de pointage forants 23 et les moyens de fraisage 55.

Il approche alors l'outil du tronc de l'arbre et, avec les moyens de pointage forants 23, commence à réaliser un avant-trou de guidage 100 dans l'écorce de l'arbre 103. Du fait de la rotation S1 de l'arbre 20, la lame de fraisage 56 prend sa position Pa la plus près de l'extrémité la plus émergente 22-1 de la première extrémité 22 de l'arbre, (grâce à la gorge hélicoïdale 58 et à l'ergot 59) et commence à fraiser le bois de l'arbre sur un diamètre beaucoup plus grand que l'avant-trou, figure 3. Il est à noter que, au fur et à mesure qu'il s'effectue, le fraisage reste précédé de la réalisation de l'avant-trou 100.

La lame de fraisage entame ainsi le bois de l'arbre 103 sur une profondeur déterminée par l'utilisateur de l'outil, essentiellement selon son expérience dans le domaine du gemmage, pour réaliser une care 106 (selon la terminologie des gemmeurs) assez importante pour permettre la sécrétion d'une bonne quantité d'oléorésine, mais pas trop invasive pour ne pas trop blesser l'arbre.

Quand la care 106 est obtenue avec la profondeur voulue, l'utilisateur arrête le fonctionnement du moteur 30 dans le sens S1 et le commande immédiatement au moyen de l'inverseur pour qu'il tourne dans l'autre sens, en l'occurrence le sens S2, tout en maintenant l'outil pour que les moyens de pointage forants 23 restent dans l'avant-trou 100.

Dès que l'arbre 20 est entraîné en rotation dans le sens S2, les moyens de pointage forants 23 ne forent plus le bois de l'arbre 103, mais restent positionnés dans l'avant-trou 103 pour continuer à bien guider l'outil par rapport à l'arbre, la lame de fraisage 56 passe, comme explicité ci-avant, de sa position Pa à proximité de la partie 22-1 de l'extrémité 22, à sa position en retrait Pr (représentée partiellement en traits interrompus sur la figure 1), ce retrait étant obtenu par la rotation de l'arbre 20 dans le sens S2 entraînant le déplacement de l'ergot 59, solidaire du manchon 55, dans la gorge 58.

Suite à la commande de la rotation de l'arbre 20 dans le sens S2 et grâce à la configuration fonctionnelle de la roue libre 44 comme décrit ci-avant, la pompe péristaltique 40 se met en marche (alors que, lors de la rotation de l'arbre dans le sens S1, du fait de la structure de cette même roue libre 44, elle ne fonctionnait pas). Elle aspire le produit contenu dans la source de produit Sp et le refoule, via sa sortie 42, la conduite 43-1, la cavité collecteur 47 et la conduite 43-2, jusqu'à l'endroit Ev.

Cet endroit Ev est défini ici par le volume annulaire qui est sensiblement délimité par la paroi de la care 106, la lame de fraisage 56 qui est éloignée du fond de la care et la partie de la première extrémité 22 de l'arbre 20 qui plonge dans la care 106, en notant que les moyens de pointage forants 23 sont toujours enfoncés et maintenus, par l'utilisateur qui teint l'outil, dans l'avant-trou 100 précédemment creusé.

La viscosité du produit et la rotation de la lame de fraisage 56 légèrement éloignée du fond de la care et qui pivote dans le sens S2 dans lequel elle ne fraise pas, permettent de parfaitement étaler sur le fond de la care le produit injecté dans le volume annulaire décrit ci-dessus.

Le processus de récolte de l'oléorésine selon des techniques de l'art antérieur bien connues des gemmeurs peut alors commencer. Comme, en outre, ce processus ne fait pas partie de la présente invention, il ne sera pas décrit ici.

A la lecture des deux descriptions respectivement structurelle et fonctionnelle, données ci-dessus, il apparaît clairement que l'outil de gemmage selon l'invention atteint bien, au moins en grande partie, les buts définis au préambule de la présente description.

## Revendications

1. Outil de gemmage comportant:
• un support (10),
• un arbre de rotation (20) défini selon un axe de rotation (21),
• des moyens pour monter ledit arbre en rotation par rapport au support (10) de façon qu'au moins une première extrémité (22) du dit arbre émerge à l'extérieur (Ex) du support,
• des moyens (30) pour commander la rotation du dit arbre (20) autour de son axe de rotation (21),
• des moyens de fraisage (50) définis selon un axe de fraisage (51), et
• des moyens pour associer en rotation les moyens de fraisage (50) à ladite première extrémité (22) du dit arbre (20) de façon que l'axe de fraisage (51) soit sensiblement confondu avec l'axe de rotation (21),
outil **caractérisé en ce qu'**il comporte en outre :
• une pompe (40) comportant une entrée d'aspiration (41) et une sortie d'insufflation (42),
• des moyens pour commander le fonctionnement de ladite pompe (40) par la rotation du dit arbre (20), et
• des moyens (43) pour relier la sortie d'insufflation (42) à un endroit (Ev) situé à l'extérieur (Ex) du dit support (10) et voisin de la partie (22-1) la plus émergente de la première extrémité (22) de l'arbre de rotation (20).

2. Outil de gemmage selon la revendication 1, **caractérisé par le fait que** :
• les moyens (30) pour commander la rotation du dit arbre (20) autour de son axe de rotation (21) sont agencés pour commander la rotation du dit arbre (20), soit dans un premier sens S1, soit dans un second sens S2 opposé au premier sens S1,
• les moyens de fraisage (50) sont aptes à fraiser uniquement lorsque ledit arbre de rotation (20) pivote dans le premier sens de rotation S1, et que
• les moyens pour commander le fonctionnement de ladite pompe (40) sont agencés de façon que la pompe fonctionne uniquement quand l'arbre (20) pivote dans le second sens de rotation S2.

3. Outil de gemmage selon la revendication 2, **caractérisé par le fait que** les moyens de fraisage (50) comportent :
• un manchon (55) monté coulissant sur ladite première extrémité (22) du dit arbre (20) entre une première position et une seconde position, la première position étant celle dans laquelle ledit manchon (55) est proche de ladite partie (22-1) la plus émergente de la première extrémité (22) de l'arbre (20), la seconde position étant celle dans laquelle ledit manchon (55) est éloigné de cette partie la plus émergente (22-1),
• des moyens pour positionner ledit manchon dans sa première position quand ledit arbre (20) pivote dans le premier sens de rotation S1, et dans sa seconde position quand ledit arbre (20) pivote dans le second sens de rotation S2, et
• au moins une lame de fraisage (56) montée solidaire du dit manchon (55) de façon qu'elle pivote autour de l'axe de rotation (21), la lame de fraisage (56) étant solidarisée avec ledit manchon de façon à ne fraiser que lorsque ledit arbre (20) pivote dans le premier sens S1.

4. Outil de gemmage selon la revendication 3, **caractérisé par le fait que** les moyens pour positionner le manchon (55) dans l'une des première (Pa) et seconde (Pr) positions quand ledit arbre de rotation (20) pivote respectivement dans un sens et dans l'autre (S1, S2) et les moyens pour associer en rotation les moyens de fraisage (50) à ladite première extrémité (22) du dit arbre (20) comportent :
• une gorge (58) de forme hélicoïdale suivant l'axe de rotation (21) réalisée dans l'un des deux éléments suivants : arbre de rotation (20), manchon (55), et
• un ergot (59) monté solidaire en saillie sur l'autre de ces deux éléments de façon qu'il plonge dans ladite gorge et la parcourt quand ledit arbre de rotation (20) pivote dans les deux sens de rotation S1, S2.

5. Outil de gemmage selon la revendication 4, **caractérisé par le fait que** ladite gorge (58) est réalisée dans l'arbre de rotation (20) et que ledit ergot (59) est monté sur ledit manchon (55).

6. Outil de gemmage selon l'une des revendications précédentes, **caractérisé par le fait qu'**il comporte en outre :
• des moyens de pointage forants (23) définis selon un axe de pointage (24), et
• des moyens pour associer les moyens de pointage forants à la partie (22-1) la plus émergente de ladite première extrémité (22) du dit arbre de rotation (20) de façon que l'axe de pointage (23) soit sensiblement confondu avec l'axe de rotation (21) et que ces moyens de pointage (23) pointent en forant uniquement lorsque ledit arbre de rotation (20) pivote dans le premier sens de rotation S1.

7. Outil de gemmage selon l'une des revendications précédentes, **caractérisé par le fait que** ladite pompe (40) est une pompe péristaltique constituée d'au moins un corps (40-1), un tube flexible (40-2) et un rotor (40-3) apte à être entraîné en rotation pour presser de façon cyclique le tube flexible à l'intérieur du corps.

8. Outil de gemmage selon la revendication 7 quand elle dépend de la revendication 2, **caractérisé par le fait que** les moyens pour commander le fonctionnement de ladite pompe péristaltique sont constitués par :
• une roue libre (44) comportant au moins deux bagues respectivement intérieure (45) et extérieure (46),
• des moyens pour fixer la bague intérieure (45) au dit arbre (20),
• des moyens pour fixer la bague extérieure (46) au dit rotor (40-3), et
• des moyens de roulement (44-5-6) montés en coopération entre les deux bagues intérieure et extérieure (45, 46), ces moyens de roulement (44-5-6) étant agencés pour entraîner en rotation la bague extérieure (46) par rapport à la bague intérieure (45) uniquement quand la bague intérieure (45) pivote dans le second sens de rotation S2.

9. Outil de gemmage selon la revendication 8, **caractérisé par le fait que** les moyens (43) pour relier la sortie d'insufflation (42) à un endroit (Ev) voisin de la partie (22-1) la plus émergente de la première extrémité (22) de l'arbre (20) sont constitués par :
• une cavité collecteur (47) étanche comportant au moins une entrée (48) et une sortie (49), cette cavité collecteur étant agencée de façon que sa paroi intérieure soit définie par au moins une partie de la paroi du manchon (55), ce dernier étant monté coulissant dans ladite cavité collecteur au moyen d'un passage étanche,
• une première conduite (43-1) reliant la sortie d'insufflation (42) de ladite pompe à l'entrée (48) de la cavité collecteur (47), et
• une seconde conduite (43-2) reliant la sortie (49) de ladite cavité collecteur (47) à l'endroit (Ev) voisin de ladite partie (22-1) la plus émergente de la première extrémité (22) de l'arbre, ladite seconde conduite étant réalisée dans ledit manchon (55).

10. Outil de gemmage selon la revendication 9, **caractérisé par le fait que** ladite cavité collecteur (47) présente une forme annulaire entourant ledit arbre de rotation (20), la paroi latérale de l'arbre de rotation constituant la paroi annulaire centrale de la cavité collecteur (47).

## Patentansprüche

1. Pechereiwerkzeug, umfassend:
• einen Träger (10),
• eine Drehwelle (20), die längs einer Drehachse (21) definiert ist,
• Mittel zum Montieren der Drehwelle in Bezug auf den Träger (10) in der Weise, dass wenigstens ein erstes Ende (22) der Welle in die äußere Umgebung (Ex) des Trägers vorsteht,
• Mittel (30) zum Steuern der Drehung der Welle (20) um ihre Drehachse (21),
• Fräsmittel (50), die längs einer Fräsachse (51) definiert sind, und
• Mittel zum rotatorischen Verbinden der Fräsmittel (50) mit dem ersten Ende (22) der Welle (20) in der Weise, dass die Fräsachse (51) mit der Drehachse (21) im Wesentlichen zusammenfällt,
wobei das Werkzeug **dadurch gekennzeichnet ist, dass** es außerdem umfasst:
• eine Pumpe (40), die einen Ansaugeinlass (41) und einen Einblasauslass (42) aufweist,
• Mittel zum Steuern des Betriebs der Pumpe (40) durch Drehen der Welle (20) und
• Mittel (43) zum Verbinden des Einblasauslasses (42) mit einem Ort (Ev), der sich in der äußeren Umgebung (Ex) des Trägers (10) und benachbart zu dem am weitesten vorstehenden Teil (22-1) des ersten Endes (22) der Drehwelle (20) befindet.

2. Pechereiwerkzeug nach Anspruch 1, **dadurch gekennzeichnet, dass**:
• die Mittel (30) zum Steuern der Drehung der Welle (20) um ihre Drehachse (21) dafür ausgelegt sind, die Drehung der Welle (20) entweder in einer ersten Richtung S1 oder in einer zweiten Richtung S2 entgegengesetzt zu der ersten Richtung S1 zu steuern,
die Fräsmittel (50) dafür ausgelegt sind, ausschließlich dann zu fräsen, wenn sich die Drehwelle (20) in der ersten Drehrichtung S1 dreht, und dass
• die Mittel zum Steuern des Betriebs der Pumpe (40) in der Weise ausgebildet sind, dass die Pumpe ausschließlich dann arbeitet, wenn sich die Welle (20) in der zweiten Drehrichtung S2 dreht.

3. Pechereiwerkzeug nach Anspruch 2, **dadurch gekennzeichnet, dass** die Fräsmittel (50) umfassen:
• eine Muffe (55), die auf dem ersten Ende (22) der Welle (20) zwischen einer ersten Position und einer zweiten Position verschiebbar montiert ist, wobei die erste Position jene ist, in der sich die Muffe (55) nahe bei dem am weitesten vorstehenden Teil (22-1) des ersten Endes (22) der Welle (20) befindet, und die zweite Position jene ist, in der die Muffe (55) von diesem am weitesten vorstehenden Teil (22-1) entfernt ist,
• Mittel zum Positionieren der Muffe in ihrer ersten Position, wenn sich die Welle (20) in der ersten Drehrichtung S1 dreht, und in der zweiten Position, wenn sich die Welle (20) in der zweiten Drehrichtung S2 dreht, und
• wenigstens ein Fräsmesser (56), das fest an der Muffe (55) montiert ist, derart, dass es sich um die Drehachse (21) dreht, wobei das Fräsmesser (56) derart mit der Muffe fest verbunden ist, dass es nur fräst, wenn sich die Welle (20) in der ersten Richtung S1 dreht.

4. Pechereiwerkzeug nach Anspruch 3, **dadurch gekennzeichnet, dass** die Mittel zum Positionieren der Muffe (55) in der ersten Position (Pa) oder in der zweiten Position (Pr), wenn sich die Drehwelle (20) entsprechend in der einen oder in der anderen Richtung (S1, S2) dreht, und die Mittel zum rotatorischen Verbinden der Fräsmittel (50) mit dem ersten Ende (22) der Welle (20) umfassen:
• eine entlang der Drehachse (21) schraubenförmige Nut (58), die in einem der zwei folgenden Elemente ausgebildet ist: Drehwelle (20), Muffe (55), und
• einen Vorsprung (59), der an dem anderen dieser beiden Elemente vorstehend fest montiert ist, derart, dass er in die Nut eingreift und sie durchläuft, wenn sich die Drehwelle (20) in den beiden Drehrichtungen S1, S2 dreht.

5. Pechereiwerkzeug nach Anspruch 4, **dadurch gekennzeichnet, dass** die Nut (58) in der Drehwelle (20) ausgebildet ist und der Ansatz (59) an der Muffe (55) montiert ist.

6. Pechereiwerkzeug nach einem der vorhergehenden Ansprüche, **dadurch gekennzeichnet, dass** es außerdem umfasst:
• Bohrpunktierungsmittel (23), die längs einer Punktierungsachse (24) definiert sind, und
• Mittel zum Verbinden der Bohrpunktierungsmittel mit dem am weitesten vorstehenden Teil (22-1) des ersten Endes (22) der Drehwelle (20), derart, dass die Punktierungsachse (23) mit der Drehachse (21) im Wesentlichen zusammenfällt und dass diese Punktierungsmittel (23) ausschließlich dann bohrend punktieren, wenn sich die Drehwelle (20) in der ersten Drehrichtung S1 dreht.

7. Pechereiwerkzeug nach einem der vorhergehenden Ansprüche, **dadurch gekennzeichnet, dass** die Pumpe (40) eine Peristaltikpumpe ist, die aufgebaut ist zumindest aus einem Körper (40-1), einem biegsamen Rohr (40-2) und einem Rotor (40-3), der rotatorisch antreibbar ist, um das biegsame Rohr innerhalb des Körpers zyklisch zusammenzudrücken.

8. Pechereiwerkzeug nach Anspruch 7, wenn abhängig von Anspruch 2, **dadurch gekennzeichnet, dass** die Mittel zum Steuern des Betriebs der Peristaltikpumpe gebildet sind durch:
• einen Freilauf (44), der wenigstens zwei Ringe, nämlich einen inneren Ring (45) und einen äußeren Ring (46), aufweist,
• Mittel zum Befestigen des inneren Rings (45) an der Welle (20),
• Mittel zum Befestigen des äußeren Rings (46) an dem Rotor (40-3) und
• Wälzmittel (44-5-6), die zusammenwirkend zwischen dem inneren Ring und dem äußeren Ring (45, 46) eingesetzt sind, wobei diese Wälzmittel (44-5-6) dafür ausgelegt sind, den äußeren Ring (46) in Bezug auf den inneren Ring (45) ausschließlich dann rotatorisch anzutreiben, wenn sich der innere Ring (45) in der zweiten Drehrichtung S2 dreht.

9. Pechereiwerkzeug nach Anspruch 8, **dadurch gekennzeichnet, dass** die Mittel (43) zum Verbinden des Einblasauslasses (42) mit einem Ort (Ev) benachbart zu dem am weitesten vorstehenden Teil (22-1) des ersten Endes (22) der Welle (20) gebildet sind durch:
• einen dichten Sammelhohlraum (47), der wenigstens einen Eingang (48) und einen Ausgang (49) aufweist, wobei dieser Sammelhohlraum in der Weise angeordnet ist, dass seine Innenwand durch wenigstens einen Teil der Wand der Muffe (55) definiert ist, wobei diese Letztere mit Hilfe eines abgedichteten Durchgangs in den Sammelhohlraum verschiebbar montiert ist,
• eine erste Leitung (43-1), die den Einblasauslass (42) der Pumpe mit dem Eingang (48) des Sammelhohlraums (47) verbindet, und
• eine zweite Leitung (43-2), die den Ausgang (49) des Sammelhohlraums (47) mit dem Ort (Ev) benachbart zu dem am weitesten vorstehenden Teil (22-1) des ersten Endes (22) der Welle verbindet, wobei die zweite Leitung in der Muffe (55) ausgebildet ist.

10. Pechereiwerkzeug nach Anspruch 9, **dadurch gekennzeichnet, dass** der Sammelhohlraum (47) eine Ringform aufweist, die die Drehwelle (20) umgibt, wobei die Seitenwand der Drehwelle die mittlere ringförmige Wand des Sammelhohlraums (47) bildet.

## Claims

1. A resin-tapping tool comprising:
• a support (10);
• a rotary shaft (20) defined on an axis of rotation (21);
• means for mounting said rotary shaft relative to the support (10) so that at least a first end (22) of said shaft emerges to the outside (Ex) of the support;
• means (30) for causing said shaft (20) to rotate about its axis of rotation (21);
• milling means (50) defined on a milling axis (51); and
• means for associating the milling means (50) in rotation with said first end (22) of said shaft (20) so that the milling axis (51) coincides substantially with the axis of rotation (21);
the tool being **characterized in that** it further comprises:
• a pump (40) having a suction inlet (41) and a blow outlet (42);
• means for causing said pump (40) to operate by rotating said shaft (20); and
• means (43) for connecting the blow outlet (42) to a location (Ev) situated at the outside (Ex) of said support (10) and adjacent to the most emerging portion (22-1) of the first end (22) of the rotary shaft (20).

2. A resin-tapping tool according to claim 1, **characterized by** the fact that:
• the means (30) for causing said shaft (20) to rotate about its axis of rotation (21) are arranged to cause said shaft (20) to rotate either in a first direction S1, or in a second direction S2 opposite to the first direction S1;
• the milling means (50) are suitable for milling only when said rotary shaft (20) is rotating in the first direction of rotation S1, and that
• the means for causing said pump (40) to operate are arranged in such a manner that the pump operates only when the shaft (20) is rotating in the second direction of rotation S2.

3. A resin-tapping tool according to claim 2, **characterized by** the fact that the milling means (50) comprise:
• a sleeve (55) slidably mounted on said first end (22) of said shaft (20) between a first position and a second position, the first position being the position in which said sleeve (55) is close to said most emerging portion (22-1) of the first end (22) of the shaft (20), the second position being the position in which said sleeve (55) is at a distance from said most emerging portion (22-1);
• means for positioning said sleeve in its first position when said shaft (20) is rotating in the first direction of rotation S1, and in its second position when said shaft (20) is rotating in the second direction of rotation S2; and
• at least one milling blade (56) secured to said sleeve (55) so as to rotate about the axis of rotation (21), the milling blade (56) being secured with said sleeve in such a manner as to mill only when said shaft (20) is rotating in the first direction S1.

4. A resin-tapping tool according to claim 3, **characterized by** the fact that the means for positioning the sleeve (55) in one of the first and second positions (Pa, Pr) when said rotary shaft (20) is rotating respectively in one direction or in the other direction (S1, S2), and the means for associating the milling means (50) in rotation with said first end (22) of said shaft (20) comprise:
• a groove (58) of helical shape about the axis of rotation (21) and made in one of the following two element: the rotary shaft (20), and the sleeve (55); and
• a lug (59) mounted to project from the other one of these two elements so as to engage in said groove and travel along it when said rotary shaft (20) rotates in either direction of rotation S1, S2.

5. A resin-tapping tool according to claim 4, **characterized by** the fact that said groove (58) is made in the rotary shaft (20) and said lug (59) is made on said sleeve (55).

6. A resin-tapping tool according to any preceding claim, **characterized by** the fact that it further comprises:
• drilling scoring means (23) defined on a scoring axis (24); and
• means for associating the drilling scoring means with the most emerging portion (22-1) of said first end (22) of said rotary shaft (20) in such a manner that the scoring axis (23) coincides substantially with the axis of rotation (21) and that the scoring means (23) score by drilling only when said rotary shaft (20) is rotating in the first direction of rotation S1.

7. A resin-tapping tool according to any preceding claim, **characterized by** the fact that said pump (40) is a peristaltic pump constituted at least by a body (40-1), a flexible tube (40-2), and a rotor (40-3) suitable for being driven in rotation so as to press cyclically against the flexible tube inside the body.

8. A resin-tapping tool according to claim 7 when depending on claim 2, **characterized by** the fact that the means for controlling the operation of said peristaltic pump are constituted by:
• a freewheel (44) having at least two rings, respectively an inner ring (45) and an outer ring (46);
• means for fastening the inner ring (45) to said shaft (20);
• means for fastening the outer ring (46) to said rotor (40-3); and
• rolling means (44-5-6) mounted to co-operate between the inner and outer rings (45, 46), the rolling means (44-5-6) being arranged to drive the outer ring (46) in rotation relative to the inner ring (45) only when the inner ring (45) is rotating in the second direction of rotation S2.

9. A resin-tapping tool according to claim 8, **characterized by** the fact that the means (43) for connecting the blow outlet (42) to a location (Ev) adjacent to the most emerging portion (22-1) of the first end (22) of the shaft (20) are constituted by:
• a leaktight collector cavity (47) including at least an inlet (48) and an outlet (49), the collector cavity being arranged so that its inside wall is defined at least by a portion of the wall of the sleeve (55), the sleeve being slidably mounted in said collector cavity via a leaktight passage;
• a first pipe (43-1) connecting the blow outlet (42) of said pump to the inlet (48) of the collector cavity (47); and
• a second pipe (43-2) connecting the outlet (49) of said collector cavity (47) to the location (Ev) adjacent to said most emerging portion (22-1) of the first end (22) of the shaft, said second pipe being made in said sleeve (55).

10. A resin-tapping tool according to claim 9, **characterized by** the fact that said collector cavity (47) is annular in shape surrounding said rotary shaft (20), the side wall of the rotary shaft constituting the central annular wall of the collector cavity (47).
